Europäisches Patentamt

European Patent Office

Office européen des brevets

(19)

(11) Numéro de publication: **0 242 280 B1**

(12) **FASCICULE DE BREVET EUROPEEN**

(45) Date de publication du fascicule du brevet:
31.01.90

(51) Int. Cl.⁴: **B01F 5/02**

(21) Numéro de dépôt: 87400798.2

(22) Date de dépôt: 09.04.87

(54) Procédé et dispositif de traitement d'un liquide alimentaire avec un gaz.

(30) Priorité: 15.04.86 FR 8605341

(43) Date de publication de la demande:
21.10.87 Bulletin 87/43

(45) Mention de la délivrance du brevet:
31.01.90 Bulletin 90/5

(84) Etats contractants désignés:
BE CH DE ES FR GB GR IT LI LU NL SE

(56) Documents cités:
DE-A- 1 557 197
DE-A- 2 644 378
DE-A- 3 334 824
FR-A- 778 202
FR-A- 799 184
FR-A- 971 536
FR-A- 2 509 996
GB-A- 1 156 417
GB-A- 1 274 195
US-A- 4 328 107
US-A- 4 447 157

(73) Titulaire: L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07(FR)

(72) Inventeur: Mizandjian, Jean-Luc, 44-46, rue Gabriel Peri, F-91430 Igny(FR)
Inventeur: Meyer, Jean-Marc, 149, boulevard de la Reine, F-78000 Versailles(FR)
Inventeur: Amen, Jean, 108, boulevard de la Reine, F-78000 Versailles(FR)

(74) Mandataire: Sadones Laurent, Renée et al, L'AIR LIQUIDE 75, quai d'Orsay, F-75321 Paris Cédex 07(FR)

## Description

La présente invention concerne le traitement d'un produit liquide alimentaire ou biologique avec un gaz, en vue de la modification des concentrations et natures des gaz dissous dans un liquide alimentaire, du genre où l'on injecte un gaz de substitution ou d'addition dans un courant dudit liquide alimentaire aboutissant à une cuve de débullage.

Dans les procédés connus de traitement agro-alimentaires et biologiques mettant en œuvre des produits liquides ou visqueux, on est parfois amené à fixer de façon précise la teneur en oxygène dissous dans le but d'éviter, par excès d'oxygène, des altérations de ces produits. Dans certains cas, il est nécessaire d'atteindre une teneur en oxygène dissous très basse, comprise entre 0,25 mg/l et 0 mg/l, et différentes techniques permettent d'atteindre cet objectif, à savoir:

• une technique thermique qui est mal adaptée au traitement des produits alimentaires sensibles à la chaleur, dont le coût de fonctionnement est important du fait de sa consommation en énergie;

• une technique utilisant un gaz inerte tel l'azote ou l'anhydride carbonique transféré dans le liquide au moyen de diffuseurs classiques pour «déplacer» l'oxygène dissous qui sont d'un coût d'investissement et de fonctionnement faible, mais dont les performances restente limitées, notamment lorsque l'on veut les utiliser pour les traitements en continu.

Le brevet DE-A 3 334 824 a également proposé de procéder à ladite substitution par élaboration d'une émulsion du gaz de traitement et du produit alimentaire ou biologique par injection d'un gaz de substitution dans un courant dudit produit liquide alimentaire ou biologique aboutissant à la partie basse d'une cuve de stockage formant une cuve de débullage, selon lequel on élabore une émulsion dudit gaz de traitement et dudit produit alimentaire ou biologique par injection simultanée et continue d'un courant de gaz et d'un jet de produit liquide dans une chambre de mélange confinée, de laquelle ledit liquide émulsionné ainsi formé s'échappe pour être dirigé vers une réserve de produit liquide dans une cuve de stockage-débullage; mais dans ce cas l'émulsion est faite à une certaine distance de la cuve, si bien que les particules de liquide pulvérisé par le gaz ont tendance à se réunier par coalescence, ainsi que les fines bulles gazeuses, ce qui conduit par la suite à un échange de substitution détérioré dans la cuve.

Le problème à l'origine de la présente invention, a été de façon particulière et précise, de définir une technique de désoxygénation quasi complète des liquides alimentaires et biologiques (concentration visée comprise entre 0 et 0,25 mg/l d'oxygène dissous) en partant d'un liquide ayant une concentration en oxygène dissous pouvant atteindre 12 mg/l en mettant en œuvre un gaz inerte ($N_2$, $CO_2$ ou un mélange $N_2$–$CO_2$), qui soit capable d'atteindre l'objectif visé aussi bien en fonctionnement discontinu qu'en fonctionnement continu ou semi-continu, qui soit simple donc peut coûteuse à l'investissement et à l'entretien et peu coûteuse en fonctionnement.

Ces objectifs sont atteints, selon l'invention, en ce que ladite émulsion du liquide est faite juste avant pénétration dans la cuve de débullage, avec accroîssement de vitesse dans un passage d'éjection, jusqu'à atteindre une vitesse de l'ordre de 15 à 30 m/s. Grâce à la proximité de la réalisation de l'émulsion et aussi grâce à la vitesse d'éjection, on assure les conditions optimales d'échange de substitution gazeuse entre ladite émulsion et le liquide en cuve de débullage.

L'invention concerne également une installation de traitement d'un produit liquide alimentaire ou biologique destiné à mettre en œuvre le procédé ci-dessus, du genre mettant en œuvre une cuve de stockage-débullage alimentée à partir d'un dispositif de mélange gaz-liquide, caractérisé en ce que le dispositif de mélange, de type connu en soi, à convergent-divergent séparé par un col cylindrique, est monté au travers d'une paroi latérale de la cuve de débullage, l'agencement du dispositif de mélange par rapport à la cuve de débullage étant telle que le col de tuyère convergente-divergente se situe au niveau de la paroi de cuve.

Le système de double injection dans une chambre assure un transfert gaz-liquide efficace par la création d'une forte émulsion qui est immédiatement injectée dans la cuve, ce qui conduit à optimaliser le transfert gaz et permet le traitement souhaité, par exemple l'élimination de l'oxygène.

On assure ainsi la formation d'une émulsion de bulles gazeuses dans le liquide et on maintient un débit d'injection gazeuse constant. L'émulsion liquide-gaz sortant du passage de sortie est maintenue à l'intérieur de la cuve ; de préférence une mise en rotation du liquide propulsé à l'intérieur de la cuve, provoqué par une disposition tangentielle de l'éjecteur par rapport à une paroi latérale cylindrique de cuve permet d'augmenter le temps de contact gaz-liquide assurant efficacement la dernière étape du transfert avant débullage. Le procédé du traitement peut-être mis en oeuvre selon les contraintes industrielles de fabrication:

soit en traitement continu : le liquide est traité lors d'un seul passage dans la chambre de mélange et la cuve.

soit en traitement discontinu : le liquide est traité en "batch", une pompe de recyclage assure un mélange parfait du liquide dans la cuve, ou réacteur.

soit en traitement semi-continu: une partie du liquide soutiré est réinjecté pour permettre un brassage correct du réacteur.

Dans ces mises en oeuvre, on utilise de préférence une cuve verticale dont la hauteur est environ trois fois le diamètre, la chambre de mélange à passage d'éjection est avantageusement montée sur le réacteur au-dessus du point de soutirage et à une hauteur de préférence égale au cinquième de la hauteur du réacteur par rapport au fond de la cuve. Une orientation du passage d'éjection entre 0 et 60° vers le bas par rapport à l'horizontale évite la coalescence de bulles.

Un recyclage de la phase gazeuse riche en gaz à injecter dans l'appareil de transfert est parfois avantageux, et plusieurs dispositifs à chambre de mélange peuvent être utilisés. Le réacteur est, si nécessaire, mis sous pression pour assurer une saturation du liquide au-delà de la pression atmosphérique.

Les caractéristiques et avantages de l'invention ressortiront d'ailleurs de la description qui suit à titre d'exemple, en référence aux dessins annexés dans lesquels:

- la figure 1 est une vue en coupe d'un dispositif de mélange utilisable dans le procédé ou l'installation selon l'invention;
- les figures 2 à 9, sont des vues schématiques de quelques mises en œuvre ;

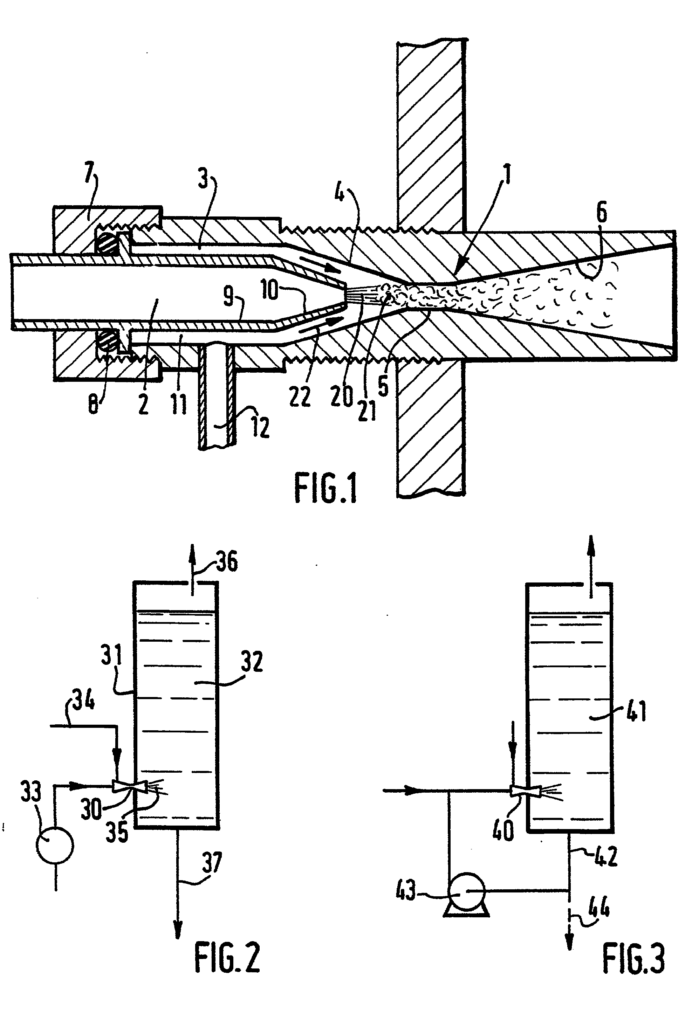

En se référant à la figure 1, le dispositif de mélange est constitué
- d'une pièce de forme générale cylindrique 1, avec un passage axial 2, présentant de gauche à droite sur le dessin, c'est à dire dans le sens d'écoulement des fluides :
. une chambre de mélange formée d'une partie cylindrique 3 se poursuivant par une partie tronconique convergente 4
. un passage d'éjection 5 ou cylindre de transfert
. un cône de diffusion 6, partie divergente permettant l'injection du mélange GAZ/LIQUIDE dans la cuve de stockage débullage.
- d'une pièce 9 ou buse d'injection de liquide constituée à son extrémité amont d'une partie cylindrique raccordée à une source de produit liquide alimentaire ou biologique sous pression et se terminant par une sortie tronconique 10. La pièce 9 ménage, avec la partie cylindrique 3, un passage annulaire 11 dans lequel arrive un conduit transversal 12 d'alimentation de gaz sous pression.
- d'une pièce 7 ou écrou assurant le raccordement des pièces 1 et 9 par l'intermédiaire d'un joint 8.

En fonctionnement, un produit liquide alimentaire ou biologique est introduit sous pression dans la buse 9 pour former, en sortie, un jet liquide 20 de vitesse de 15 à 30 m/s, de préférence 20 m/s. Le jet liquide ainsi généré parvient dans la chambre de mélange 21 et rejoint le courrant gazeux sous pression 22 entrant par le conduit 12.

Le transfert de matière GAZ/LIQUIDE est alors assuré
- dans la chambre de mélange 21 par la création d'une émulsion GAZ/LIQUIDE à forte aire interfaciale
- dans le conduit d'éjection 5 permettant un écoulement homogène à une vitesse de 15 à 30 m/s, de préférence 20 m/s
- dans le cône de diffusion 6 maintenant l'émulsion créée et limitant la coalescence des bulles avant l'entrée dans la cuve de stockage-débullage.

On décrit maintenant quelques mises en oeuvre.

Selon la figure 2, un dispositif de mélange 30, tel que décrit précédemment est monté au travers d'une paroi latérale 31, d'une cuve de stockage 32, à faible distance du fond pour permettre un débullage correct. Le liquide est ici transféré d'une source non représenté par une pompe 33, tandis que le gaz est transféré par une conduite 34. Le liquide émulsionné issu du dispositif de mélange 30, est introduit sous forme d'un jet évasé 35. Les bulles de gaz qui résultent du traitement s'échappent en 36, tandis que le liquide traité est soutiré en 37. Il s'agit donc là d'un fonctionnement en continu.

Selon la figure 3, le dispositif de mélange 40, est alimenté en liquide de façon à remplir progressivement une cuve 41, du liquide est soutiré au fond 42, pour être recyclé à l'entrée du dispositif de mélange 40 par une pompe 43. Il s'agit là d'un fonctionnement discontinu dénommé couramment "batch". On soutire de temps en temps en 44 du liquide traité.

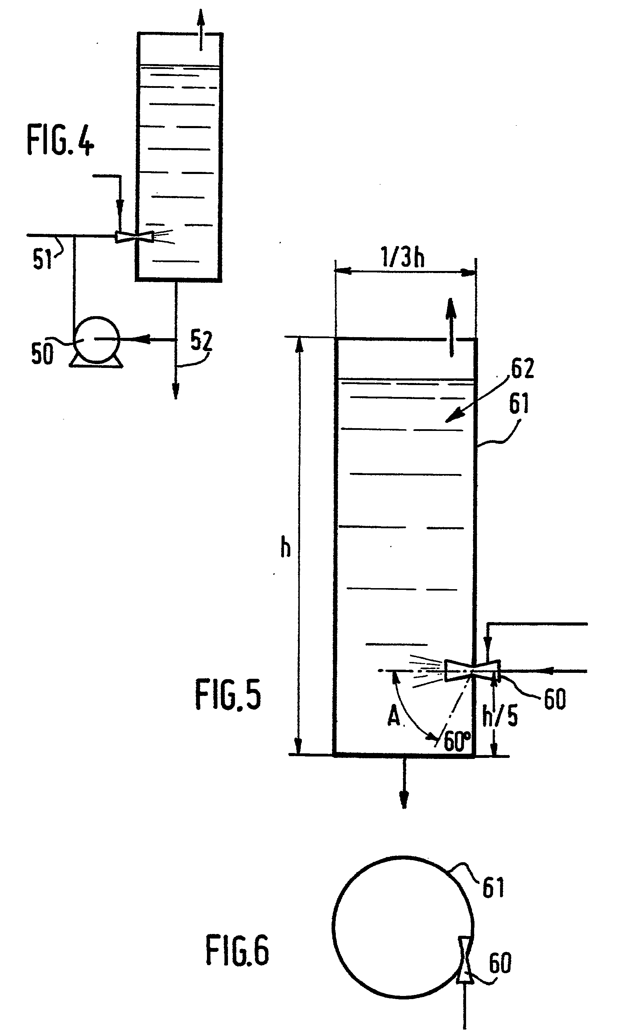

Sur la figure 4, on recycle toujours par une pompe 50, du liquide, pour assurer un brassage correct, mais on alimente en 51, en liquide à traiter et on soutire en 52, de liquide traité de façon continu. Il s'agit d'un traitement semi-continu.

Aux figures 5 et 6, on a représenté une installation du type de celle décrite à la figure 2, mais ici on a orienté l'axe du dipositif de mélange 60 quasi tangentiellement par rapport à la paroi cylindrique de la cuve 61, de façon à créer un mouvement de brassage circulaire selon F. On voit ici que, dimensionnellement, la cuve 62 a un diamètre de l'ordre du 1/3 de sa hauteur h. L'axe du dispositif de mélange est soit horizontal, soit orienté vers le bas d'un angle A pouvant aller jusqu'à 60°.

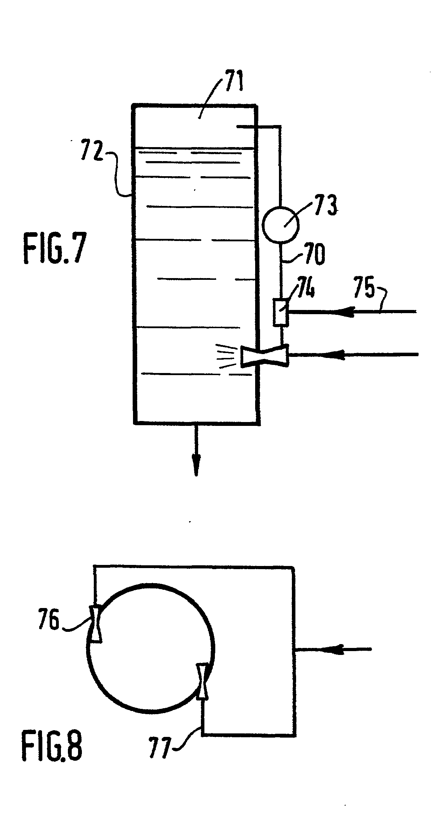

Aux figures 7 et 8, on prévoit en 70, une conduite de recyclage du gaz reliant une phase gazeuse 7, dans une cuve fermée 72 à un circulateur 73, et de là un à raccord d'introduction de gaz 74 assurant l'admission combiné du gaz de recyclage 73 avec du gaz de traitement 75

Ici (figure 8) on prévoit deux dispositifs de mélange 76 et 77, disposés tangentiellement dans la cuve pour accentuer le mouvement de brassage.

A titre d'exemples, on donne ci-après quelques résultats de mises en oeuvre de l'invenion.

**1. Désoxygènation d'eau à l'azote en circuit fermé**

| Volume de la cuve ou réacteur 0,4 m$^3$ | hauteur 1,80 m | diamètre 0,6 m |
|---|---|---|
| Liquide à traiter | Eau | |
| | Débit liquide = 2 m$^3$/h | |
| | Oxygène dissous = 9 mg/l | |
| Gaz | N$_2$ | |
| | Débit gaz = 4 m$^3$/h | |
| | Ap mélangeur = 3 bars | |
| Liquide traité | temps traitement = 10 mn | |
| | Oxygène dissous = 0,05 mg/l | |

**2. Désoxygènation – carbonatation d'eau au CO$_2$ en circuit fermé à pression atmosphérique**

| V réacteur = 0,4 m$^3$ | (h = 1,80 m, d = 0,6 m) |
|---|---|
| Liquide à traiter | Eau |
| | Débit liquide = 2 m$^3$/h |
| | O$_2$ dissous = 9,5 mg/l |
| Gaz | CO$_2$ |
| | Débit gaz = 6 m$^3$/h |
| | Ap mélangeur = 3 bars |
| Liquide traité | temps traitement = 14 mn |
| | O$_2$ dissous = 0,06 mg/l |
| | CO$_2$ dissous = 1,95 g/l |
| | pH = 5,3 |

**3. Désoxygènation d'eau à l'azote en circuit**

| Réacteur = 10 m$^3$ | (h = 1,6 m, d = 3 m) |
|---|---|
| Liquide à traiter | Eau |
| | Débit liquide = 8 m$^3$/h |
| | O$_2$ dissous = 9,5 mg/l |
| Gaz | N$_2$ |
| | Débit gaz = 40 m$^3$/h |
| | Ap éjecteur = 3 bars |
| Liquide traité | O$_2$ dissous = 0,23 mg/l |

La technique proposée s'adapte à l'oxygènation des liquides et concerne, quel que soit le gaz mis en oeuvre, non seulement les industries agro-alimentaires et biologiques, mais aussi d'autres secteurs industriels. Elle vise soit la substitution d'un gaz dissous par un autre gaz, soit l'addition d'un gaz tel le CO$_2$.

**Revendications**

1. Procédé de traitement d'un produit liquide alimentaire ou biologique en vue de la modification des concentrations et nature des gaz dissous dans ce produit alimentaire ou biologique, du genre où l'on in-

<div style="text-align:center">4</div>

jecte un gaz de substitution dans un courant dudit produit liquide alimentaire ou biologique aboutissant à une cuve de stockage formant cuve de débullage, et où l'on élabore une émulsion dudit gaz de traitement et dudit produit alimentaire ou biologique par injection simultanée et continue d'un courant de gaz et d'un jet de produit liquide dans une chambre de mélange confinée, de laquelle ledit liquide émulsionné ainsi formé s'échappe pour être dirigé à la partie basse d'une réserve de produit liquide dans la cuve de stockage-débullage, caractérisé en ce que ladite émulsion du liquide est faite juste avant pénétration dans la cuve de débullage, avec accroissement de vitesse dans un passage d'éjection, jusqu'à atteindre une vitesse de l'ordre de 15 à 30 m/s.

2. Procédé de traitement selon la revendication 1, caractérisé en ce que le courant de gaz est introduit dans la chambre de mélange confinée sous forme d'un jet annulaire autour du jet de produit liquide, ledit jet annulaire de gaz étant animé d'un mouvement de rotation.

3. Installation de traitement d'un produit liquide alimentaire ou biologique mettant en œuvre le procédé selon la revendication 1 ou 2, du genre mettant en œuvre une cuve de débullage alimentée à sa partie basse à partir d'un dispositif de mélange gaz-liquide, caractérisé en ce que le dispositif de mélange, de type connu en soi, à convergent-divergent séparé par un col cylindrique, est monté au travers d'une paroi latérale de la cuve de débullage, l'agencement du dispositif de mélange par rapport à la cuve de débullage étant telle que le col de tuyère convergente-divergente se situe au niveau de la paroi de cuve.

4. Installation de traitement selon la revendication 3, caractérisé en ce que le passage de sortie du dispositif de mélange est disposé tangentiellement à une paroi cylindrique de cuve.

5. Installation de traitement selon la revendication 3, caracterisée en ce que le passage de sortie du dispositif de mélange est incliné vers le fond de cuve d'un angle pouvant aller jusqu'à 60°.

6. Installation selon l'une quelconque des revendications 3 et 4, caractérisée en ce que des moyens sont prévus pour recycler du liquide depuis la cuve de débullage vers le dispositif de mélange.

7. Installation selon l'une quelconque des revendications 3, 4 et 5, caractérisée en ce que des moyens sont prévus pour recycler du gaz depuis la partie haute de ladite cuve de débullage vers le dispositif de mélange, la cuve de débullage étant alors fermée.

8. Application du procédé selon la revendication 1 ou 2 à la désoxygénation ou à la carbonatation de liquide alimentaires ou biologiques.

**Claims**

1. A process for treating a liquid food or biological product for the purpose of modifying the concentration and nature of the gases dissolved in this food or biological product, of the type in which a substitution gas is injected into a flow of the said liquid food or biological product leading to a storage vessel forming a debubbling vessel and in which an emulsion is produced of the said treating gas and of the said food or biological product by the simultaneous and continuous injection of a flow of gas and of a jet of liquid product into a confined mixing chamber, from which the said emulsified liquid thus formed emerges to be channelled to the lower part of a reserve of liquid product in the storage and debubbling vessel, characterised in that the said emulsion of the liquid is produced just before entering into the debubbling vessel, with an increase in speed within an ejection passage, until a speed of the order of 15 to 30 metres/sec. is reached.

2. A treatment process according to claim 1, characterised in that the gas flow is fed into the enclosed mixing chamber in the form of an annular jet around the jet of liquid product, the said annular gas jet being impelled in a rotational displacement.

3. A plant for treatment of a liquid food or biological product using the process according to claim 1 or 2, of the type using a debubbling vessel supplied in its lower portion from a gas-liquid mixing device, characterised in that the mixing device, of a type know per se, having convergent-divergent sections separated by a cylindrical neck, is mounted through a sidewall of the debubbling vessel, the arrangement of the mixing device with respect to the bubble-separator vessel being such that the neck of the convergent-divergent nozzle is situated at the level of the wall of the vessel.

4. A treatment plant according to claim 3, characterised in that the outlet passage of the mixing device is arranged tangentially to a cylindrical vessel wall.

5. A treatment plant according to claim 3, characterised in that the outlet passage of the mixing device slopes towards the bottom of the vessel at an angle which may be up to 60°.

6. A plant according to any one of claims 3 and 4, characterised in that means are provided for recycling liquid from the debubbling vessel to the mixing device.

7. A plant according to any one of claims 3, 4 and 5, characterised in that means are provided for recycling gas from the upper part of the said debubbling vessel to the mixing device, the debubbling vessel then being closed.

8. Application of the process according to claims 1 or 2 to the deoxygenation or to the carbonation of nutritional or biological liquids.

**Patentansprüche**

1. Verfahren zur Behandlung eines flüssigen Nahrungsmittels oder flüssigen biologischen Produkts

5

zur Änderung der Konzentrationen und der Art der in diesem Nahrungsmittel oder biologischen Produkt gelösten Gase, wonach ein Austauschgas in einen Strom des genannten flüssigen Nahrungsmittels oder flüssigen biologischen Produkts eingeblasen wird, der in einen einen Entgasungsbehälter bildenden Vorratsbehälter gelangt, und wonach eine Emulsion aus dem genannten Behandlungsgas und dem genannten Nahrungsmittel oder biologischen Produkt durch gleichzeitiges und fortgesetztes Einleiten eines Gasstroms und eines Strahls des flüssigen Produkts in eine abgeschlossene Mischkammer hergestellt wird, aus welcher die so gebildete emulgierte Flüssigkeit austritt und in den unteren Teil eines Vorrats von flüssigem Produkt in dem Vorrats- und Entgasungsbehälter geleitet wird, dadurch gekennzeichnet, daß die genannte Emulsion der Flüssigkeit unmittelbar vor dem Eintreten in den Entgasungsbehälter unter Geschwindigkeitszunahme bis zum Erreichen einer Geschwindigkeit von etwa 15 bis 30 m/s in einem Ausstoßkanal hergestellt wird.

2. Verfahren zur Behandlung nach Anspruch 1, dadurch gekennzeichnet, daß der Gasstrom in die abgeschlossene Mischkammer in Form eines ringförmig um den Strahl des flüssigen Produkts herum verlaufenden Strahls eingeführt wird, wobei der genannte ringförmige Gasstrahl in eine Drehbewegung versetzt wird.

3. Anlage zur Behandlung eines flüssigen Nahrungsmittels oder flüssigen biologischen Produkts zur Ausübung des Verfahrens nach Anspruch 1 oder 2, bei der ein Entgasungsbehälter eingesetzt ist, der in seinem unteren Teil aus einer Vorrichtung zur Vermischung von Gas und Flüssigkeit gespeist ist, dadurch gekennzeichnet, daß die Mischvorrichtung an sich bekannter Art mit durch ein zylindrisches Halsstück getrenntem, sich verengendem und sich erweiterndem Abschnitt durch eine Seitenwand des Entgasungsbehälters hindurchtretend angeordnet ist und daß die Mischvorrichtung in bezug auf den Entgasungsbehälter so angeordnet ist, daß sich der Hals der sich verengenden – sich erweiternden Düse im Bereich der Behälterwand befindet.

4. Behandlungsanlage nach Anspruch 3, dadurch gekennzeichnet, daß der Austrittskanal der Mischvorrichtung tangential zu einer Zylinderwand des Behälters angeordnet ist.

5. Behandlungsanlage nach Anspruch 3, dadurch gekennzeichnet, daß der Austrittskanal der Mischvorrichtung gegen den Behälterboden unter einem Winkel von bis zu 60° geneigt ist.

6. Behandlungsanlage nach Anspruch 3 oder 4, dadurch gekennzeichnet, daß eine Einrichtung zum Rezyklieren der Flüssigkeit von dem Entgasungsbehälter in Richtung auf die Mischvorrichtung vorgesehen ist.

7. Behandlungsanlage nach einem der Ansprüche 3 bis 5, dadurch gekennzeichnet, daß eine Einrichtung zum Rezyklieren des Gases von dem oberen Teil des genannten Entgasungsbehälters in Richtung auf die Mischvorrichtung vorgesehen ist, wobei der Entgasungsbehälter dann geschlossen ist.

8. Anwendung des Verfahrens nach Anspruch 1 oder 2 zum Entfernen von Sauerstoff bzw. zum Einleiten von Kohlendioxid aus bzw. in flüssige(n) Nahrungsmittel(n) oder biologische(n) Flüssigkeiten.

EP 0 242 280 B1

FIG.1

FIG.2

FIG.3

FIG.4

FIG.5

FIG.6

FIG.7

FIG.8